# EUROPEAN PATENT APPLICATION

(11) **EP 1 114 736 A1**
(43) Date of publication of application: **11.07.2001**
(21) Application number: 99940458.5
(22) Date of filing: 25.08.1999
(51) Int. Cl.: B41M 5/26, G11B 7/24

(54) **PRINTED MEDIUM AND PRINTED RECORDING MEDIUM**

(30) Priority: 01.09.1998 JP 24699598; 18.11.1998 JP 32860498
(71) Applicant: STAR MICRONICS CO., LTD., Shizuoka-shi, Shizuoka-ken 422-8654 (JP)
(72) Inventor: TSUKUDA, Yasunori Star Micronics Co., Ltd., Shizuoka-shi Sizuoka 422-8654 (JP); NAGAI, Kenichi Star Micronics Co., Ltd., Shizuoka-shi Sizuoka 422-8654 (JP); SAWAMOTO, Norihiro, Star Micronics Co., Ltd., Shizukoka-shi, Sizuoka 422-8654 (JP); KATAYAMA, Katsuyuki, Star Micronics Co., Ltd., Shizuoka-shi, Sizuoka 422-8654 (JP)
(74) Representative: Kinsler, Maureen Catherine
(86) International application number: JP9904566
(87) International publication number: WO0012319

(57) **Abstract**

The invention relates to a printing medium having a light-shielding substrate, a coloring layer a color of which is developed by heat and is fixed by light, and a light-shielding sheet which is peelable and shields the coloring layer from light, which are arranged in this order. Further the invention relates to a printing and recording medium having an optical recording member including a light-reflecting layer and a data-recording layer and one surface of which is a data recording or reading surface and the other surface of which is a printing surface, and a coloring layer which is provided on the printing surface to develop color by heat. Especially, it is a printing and recording medium having a disk-like optical recording member and a coloring layer provided with a light-shielding sheet, the color of the coloring layer being fixed by light as in (a). Further, it is preferable that a heat-insulating layer and an elastic layer are interposed between the coloring layer and the optical recording member.

## Description

### [Technical Field]

The present invention relates to a printing medium comprising a coloring layer in which color development is effected by heat and color fixing is effected by light, and to a printing and recording medium.

Further, the invention relates to a printing and recording medium comprising an optical recording member such as a CD (compact disk), CD-ROM (read only memory) or CD-R (compact disk recordable) and a coloring layer whose color is developed by heat.

### [Background Art]

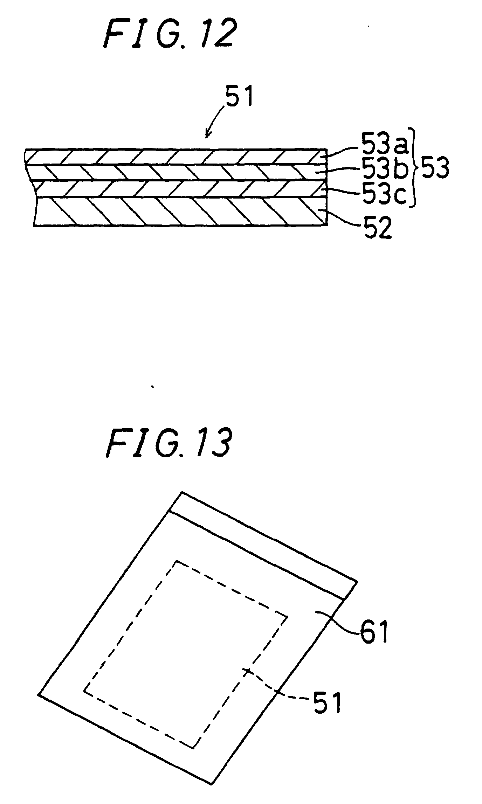

Fig. 12 is a sectional view showing a heat-sensitive printing sheet 51 which is a conventional printing medium. The heat-sensitive printing sheet 51 comprises a substrate 52 such as paper and a heat-sensitive coloring layer 53 provided thereon. The heat-sensitive coloring layer 53 is composed of three coloring layers 53a, 53b, 53c laminated on the substrate 52 which are yellow-, magenta- and cyan-color developed, respectively. Such a heat-sensitive printing sheet 51 is disclosed in Japanese Unexamined Patent Publications JP-A 3-43293 (1991) and JP-A 5-69566 (1993) etc., and printing is carried out using a printing apparatus of a so-called TA (thermo-auto chrome) system. In the printing apparatus of this type a multi-color heat sensitive recording sheet is color-developed through application of heat.

Each of the multi-color layers 53a to 53c comprises a corresponding coloring material encapsulated in microcapsules and a coupler, and has a heat-sensitive coloring level different from each other. At the time of printing, first, the yellow coloring layer 53a is color-developed through application of a predetermined amount of heat energy, and the color of the yellow coloring layer 53a is fixed through application of light having a wavelength necessary to fix the color of the yellow coloring layer 53a. Then, the magenta coloring layer 53b is color-developed through application of a predetermined amount of heat energy larger than that of heat energy for the yellow coloring layer, and the color of the magenta coloring layer 53b is fixed through application of light having a wavelength necessary to fix the color of the magenta coloring layer 53b. Finally, the cyan coloring layer 53c is color-developed through application of a predetermined amount of heat energy larger than that of heat energy for the magenta coloring layer. In this manner, the color printing is carried out.

The color of the heat-sensitive coloring layer 53 of the heat-sensitive printing sheet 51 as the printing medium is fixed by light as stated above, resulting in loss of coloring ability. Wavelengths of fixing light are 420 nm for the yellow coloring layer 53a and 365 nm for magenta coloring layer 53b. Since the colors of the coloring layers are fixed by light within an ultraviolet range, the printing medium cannot be allowed to be left as such under ordinary environment for a long period of time. Accordingly, the heat-sensitive printing sheet 51 is handled in the state of being stored in a bag 61 to which a light-shielding property is imparted with aluminum or the like as shown in Fig. 13.

However, it is inconvenient that the heat-sensitive printing sheet 51 is handled in the state of being stored in the bag 61 because of its large and bulky shape in handling. Further, in order to minimize the extent of fixing which is not involved in printing, the heat-sensitive printing sheet 51 has to be subjected to printing immediately after the bag 61 is opened to take out the heat-sensitive printing sheet 51. Accordingly, the timing of start of printing is limited, resulting in inconvenience in use.

Further, in an optical recording medium in which recorded data is reproduced by a reproduction apparatus, such as CD, CD-ROM or CD-R, one surface is used as a data recording or reading surface on which or from which data is recorded or read, and the other surface is generally used as a printing surface on which a title or the like is printed.

Recorded data of an optical recording medium is reproduced in such a manner that the optical recording medium is inserted into a reproduction apparatus, clamped and then rotated, and with the optical recording medium being rotated laser beams are applied thereto through a pickup from the data recording or reading surface side of the optical recording medium. In order to insert or take out the optical recording medium in or from the reproduction apparatus and ensure to stably reproduce the recorded data, specifications about thickness and warpage are defined. For example, the thickness is specified to be 1.2 mm, and the warpage is allowed up to 400 µm. Accordingly, when a title or the like is printed on the printing surface of the optical recording medium, it is preferable that the thickness of the medium is close to the specified thickness.

Further, it is possible that the printing medium is pasted on the printing surface of the optical recording medium, thereafter on which a title or the like is printed using the printing apparatus. In such printing, it is required to prevent data recorded on the optical recording medium from being destroyed. For example, in the case where heat applied from a thermal head is excessively transferred to the data recording layer, the recorded data is destroyed. In addition, high printing quality is required. In the case where the thermal head loses uniform contact with the printing medium because of warpage or differences in thickness of the optical recording medium which are inherent in the optical recording medium, and accordingly heat from the thermal head is not uniformly applied to the coloring layer of the printing medium, the printing quality is decreased. Usually a warpage of approximately 20 µm occurs in the optical recording medium.

### [Disclosure of Invention]

An object of the invention is to provide a printing medium and a printing and recording medium, capable of being easily handling and being available for use in printing whenever it is required, in which a coloring layer is protected from being exposed to light until printing starts.

Another object of the invention is to provide a printing and recording medium which is inserted in and taken out from a reproduction apparatus and in which stable reproduction of recorded data is ensured and high-quality printing is possible without destroying the recorded data.

The invention provides a printing medium comprising:
a light-shielding substrate;
a coloring layer provided on the substrate, a color of the coloring layer being developed by heat and being fixed by light; and
a light-shielding sheet peelably provided on the coloring layer to shield the coloring layer from light.

According to the invention, light from one side of the coloring layer is shielded by the light-shielding sheet, and light from the other side of the coloring layer is shielded by the substrate. Consequently, the printing medium can be allowed to be left as such under ordinary environment for a long period of time. The printing medium of the invention has a size and a shape which are approximately the same as in the absence of the light-shielding sheet. Thus, it is not bulky, and can be handled easily. Moreover, packaging in selling can be simplified.

Further, printing is carried out in such a manner that the light shielding sheet is peeled off, thereafter a predetermined amount of heat energy is applied to the coloring layer, and then light of a predetermined wavelength is applied to the coloring layer to fix the same. Since the light-shielding sheet can be peeled off at the occasion of printing, whenever a user wants to start printing, printing can be carried out by peeling off the light-shielding sheet. The light-shielding sheet and the substrate can prevent the color of the coloring layer from being fixed before the printing starts. As a result, letters, pictures or the like can be printed with characteristics such as desired density and color tone.

The invention still further provides a printing and recording medium comprising:
a disk-like optical recording member comprising a light-reflecting layer and a data-recording layer, one surface of the disk-like optical recording member being a data recording or reading surface and the other surface thereof being a printing surface;
a coloring layer provided on the printing surface side, a color of the coloring layer being developed by heat and fixed by light; and
a light-shielding sheet peelably provided on the printing surface side, for shielding the coloring layer from light.

According to the invention, the coloring layer is shielded from light by the light-shielding sheet and the reflecting layer. Accordingly, even when the printing and recording medium is left as such under ordinary environment for a long period of time, color fixing does not occur. The printing and recording medium of the invention is approximately the same in size and shape as one having no light-shielding sheet. Thus, it is not bulky, and can be handled easily. Moreover, packaging in selling can be simplified. In addition, whenever a user wants to start printing, printing can be carried out by peeling off the light-shielding sheet.

Recording on or reading from the optical recording member is carried out by application of light from the data recording or reading surface side. The coloring layer is provided on the printing surface side of the optical recording member, whereby various letters, pictures or the like can be printed by developing the color by heat and fixing the same by light. For example, letters, pictures or the like reflecting the recorded contents can be printed. The light-shielding sheet and the reflecting layer can prevent the color of the coloring layer from being fixed before the printing starts. Thus, letters, pictures or the like can be printed with desired density or color tone.

Further, in the invention it is preferable that the light-shielding sheet has a projecting portion for peeling.

According to the invention, the projecting portion may be formed, for example, along a plane of the light-shielding sheet, namely, in a radial direction. Further, it may be formed on a surface of the light-shielding sheet, namely, in a vertical direction to the radial direction. Users can easily peel off the light-shielding sheet by holding such a projecting portion.

Further, in the invention it is preferable that the projecting portion is formed to balance the printing and recording medium.

According to the invention, while the printing and recording medium is rotated at relatively high speed, the data is recorded or read. Since the projecting portion is formed to balance the printing and recording member, the printing and recording medium can stably be rotated at the time of recording or reading of data. Thus, the shape in which the light-shielding sheet is easily peeled off while maintaining the recording or reading actions accurately and surely can be realized.

Further, in the invention it is preferable that the light-shielding sheet has a low strength portion so as to tear in peeling.

According to the invention, the low strength portion is realized by, for example, forming a notched portion in the light-shielding sheet and forming a portion having a low film thickness. A user can peel off the light-shielding sheet easily and surely by holding the projecting portion and tearing the light-shielding sheet at the low strength portion.

Further, in the invention it is preferable that a surface of the light-shielding sheet has a region where writing of information is allowed.

According to the invention, a user can write information of letters, signals or the like in the region on the surface of the light-shielding sheet with a printing apparatus or a stamp or by hand-writing. For example, before carrying out desired printing on the printing and recording medium, information for identifying the medium can optionally be written. Thus, the convenience is remarkably enhanced.

Further, in the invention it is preferable that specific information is written in advance on a surface of the light-shielding sheet.

According to the invention, it can easily be identified at a glance by information of letters, signals or the like written in advance on the surface of the light-shielding sheet that the surface of the printing and recording medium on which the information is not written is the recording or reading surface of data. Moreover, it is possible to give users information of the recorded contents regarding the printing and recording medium, information on handling of the printing medium or the light-shielding sheet, and the like.

Further, the invention provides a printing and recording medium comprising:
an optical recording member composed of a light-reflecting layer and a data-recording layer, one surface of the optical recording member being a data recording or reading surface and the other surface thereof being a printing surface; and
a coloring layer provided on the printing surface side, a color of the coloring layer being color-developed by heat.

According to the invention, the printing and recording medium is structured of the optical recording member of relatively high thickness (e.g., 1.2 mm), and the coloring layer is provided thereon. The thickness of the coloring layer is as low as several micrometers to several tens of micrometers. The thickness of the printing and recording medium is approximately the same as the specified thickness of the optical recording member. Consequently, the printing and recording medium can be inserted in or taken out from the reproduction apparatus stably and surely. Further, the recorded data can be reproduced stably and surely.

Further, in the invention it is preferable that a heat-insulating layer for preventing heat from being transferred to the optical recording member is interposed between the optical recording member and the coloring layer.

According to the invention, heat is applied from the thermal head or the like to the coloring layer in printing a title or the like. At this time, the heat-insulating layer between the optical recording member and the coloring layer prevents heat from being transferred to the optical recording member. It is therefore possible to prevent data recorded in the optical recording member from being destroyed by heat.

Further, in the invention it is preferable that an elastic layer for uniformly transferring heat to the coloring layer is interposed between the optical recording member and the coloring layer.

According to the invention, since the elastic layer between the optical recording member and the coloring layer absorbs the warpage or difference in thickness of the optical recording member, the thermal head and the coloring layer is in good contact condition in printing a title or the like. Accordingly, the high-quality printing is enabled.

Further, both the heat-insulating layer and the elastic layer are interposed between the optical recording member and the coloring layer, whereby it is made possible to prevent heat from the thermal head from being transferred to the optical recording member, to achieve proper contact of the thermal head and the coloring layer, to prevent the recorded data from being destroyed by heat and to realize high-quality printing.

Moreover, the invention provides a printing and recording medium comprising:
an optical recording member composed of a light-reflecting layer and a data-recording layer, one surface of the optical recording member being a data recording or reading surface and the other surface thereof being a printing surface;
a coloring member provided on the printing surface side, including a substrate and a coloring layer provided on the substrate, a color of the coloring layer being developed by heat; and
a heat-insulating layer interposed between the optical recording member and the coloring member, for preventing heat applied in the color development from being transferred to the optical recording member.

According to the invention, the heat-insulating layer that prevents heat from the thermal head from being transferred to the optical recording member in printing is interposed between the optical recording member and the coloring member. Therefore, the destruction of the recorded data by heat can be prevented also in the printing and recording medium having the coloring member having the coloring layer provided on the substrate.

Further, in the invention it is preferable that instead of the heat-insulating layer, an elastic layer which uniformly transfers heat applied in the color development, to the coloring layer, is interposed between the optical recording member and the coloring layer.

According to the invention, the elastic layer which enhances the adhesion between the thermal head and the coloring layer in the printing and which alleviates decrease in the adhesion owing to the warpage or differences in thickness of the optical recording member which are inherent in the optical recording member, is interposed between the optical recording member and the coloring member. Therefore, in the printing and recording medium having the coloring member having the coloring layer provided on the substrate, the high-quality printing is also enabled.

Further, in the invention it is preferable that an elastic layer which uniformly transfers heat applied in the color development, to the coloring layer, is interposed, in addition to the heat-insulating layer, between the optical recording member and the coloring layer.

According to the invention, both the heat-insulating layer and the elastic layer are interposed between the optical recording member and the coloring member, whereby it is made possible to prevent heat applied from the thermal head from being transferred to the optical recording member, to enhance the adhesion between the thermal head and the coloring layer, to prevent the recorded data from being destroyed by heat and to realize high-quality printing.

### [Brief Description of Drawings]

Fig. 1A is a sectional view showing a printing medium 31 of a first embodiment of the invention.

Fig. 1B is a sectional view showing a printing and recording medium 36 of a second embodiment of the invention.

Fig. 2A is a plan view showing a specific example of the printing and recording medium 36.

Fig. 2B is a side view showing a specific example of the printing and recording medium 36.

Fig. 3 is a plan view showing another specific example of the printing and recording medium 36.

Fig. 4 is a perspective view showing a simplified construction of a rotary printing apparatus 10.

Fig. 5 is a sectional view showing a printing and recording medium 19a of a third embodiment of the invention.

Fig. 6A is a sectional view showing a printing and recording medium 19b of a fourth embodiment of the invention.

Fig. 6B is a sectional view showing a printing and recording medium 19c which is another example of the fourth embodiment of the invention.

Fig. 7 is a sectional view for describing a heat-insulating action of the printing and recording mediums 19b, 19c.

Fig. 8 is a timing chart showing a bias current passage time T1, a current passage off time T2 and a current passage on time T3.

Fig. 9A is a sectional view showing a printing and recording medium 19d of a fifth embodiment of the invention.

Fig. 9B is a sectional view showing a printing and recording medium 19e which is another example of the fifth embodiment of the invention.

Figs. 10A to 10C are views for describing an elastic action of the printing and recording mediums 19d, 19e.

Fig. 11A is a sectional view showing a printing and recording medium 19f of a sixth embodiment of the invention.

Fig. 11B is a sectional view showing a printing and recording medium 19g which is another example of the sixth embodiment of the invention.

Fig. 12 is a sectional view showing a heat-sensitive printing sheet 51 which is a printing medium in the prior art.

Fig. 13 is a view for describing a method of handling the heat-sensitive printing sheet 51.

### [Best Mode for Carrying out the Invention]

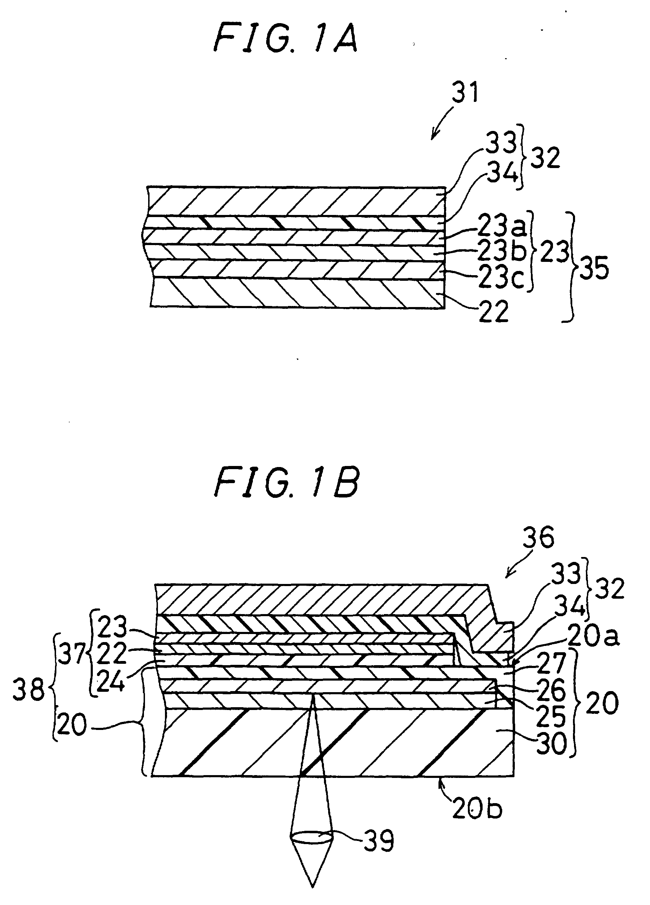

Fig. 1A is a sectional view showing a printing medium 31 of a first embodiment of the invention. The printing medium 31 comprises a substrate 22, a heat-sensitive coloring layer 23 and a light-shielding sheet 32. The heat-sensitive coloring layer 23 is provided on the light-shielding substrate 22 such as paper. The heat-sensitive coloring layer 23 is composed of three coloring layers 23a, 23b, 23c laminated on the substrate 22 which are yellow-, magenta- and cyan-color developed, respectively. The medium 35 comprising the substrate 22 and the heat-sensitive coloring layer 23 is a heat-sensitive printing sheet which is printed with a TA-system printing apparatus disclosed in, for example, Japanese Unexamined Patent Publications JP-A 3-43293 (1991) and JP-A 5-69566 (1993).

The yellow coloring layer 23a comprises a yellow coloring material encapsulated in microcapsules and a coupler. By applying heat energy of 20 mJ/mm² or more, the yellow coloring material penetrates the microcapsule, and reacts with the coupler to be color-developed. Further, when the unreacted yellow coloring material is decomposed by application of light having a wavelength of 420 nm, in the yellow coloring layer 23a, the yellow color is no longer developed and color fixing is effected.

The magenta coloring layer 23b comprises a magenta coloring material encapsulated in microcapsules and a coupler. By applying heat energy of 40 mJ/mm² or more, the magenta coloring material penetrates the microcapsule, and reacts with the coupler to develop the color. Further, the unreacted magenta coloring material is decomposed by application of light having a wavelength of 365 nm, and in the magenta coloring layer 23b, the magenta color is no longer developed and color fixing is effected.

The cyan coloring layer 23c comprises a cyan coloring material encapsulated in microcapsules and a coupler. By applying heat energy of 80 mJ/mm² or more, the cyan coloring material penetrates the microcapsule, and reacts with the coupler to develop the color.

The light-shielding sheet 32 is peelably provided on the heat-sensitive coloring layer 23, and shields the heat-sensitive coloring layer 23 from light in cooperation with the substrate 22. The light-shielding sheet 32 is made of, for example, a light-shielding film 33 and an adhesive layer 34.

The light-shielding film 33 is realized with a relatively lightweight material that shields light for fixing color of the heat-sensitive coloring layer 23. It is realized with, for example, a film having aluminum deposited thereon, a polyester film of black or the like having the light-shielding property, an organic high-molecular compound such as PVC (polyvinyl chloride resin) containing an ultraviolet absorber. Examples of the ultraviolet absorber which can be added to the organic high-molecular compound include benzotriazole, triazine and benzophenone ultraviolet absorbers.

The adhesive layer 34 is realized with a material having a low adhesion to a body to be adhered, namely, the heat-sensitive coloring layer 23 so that the adhesive layer 34 can easily be peeled off. It is realized with, for example, an acrylic adhesive.

Incidentally, the printing medium 31 can be prepared by forming the heat-sensitive coloring layer 23 on the substrate 22 and the adhesive layer 34 on the heat-sensitive coloring layer 23 and further adhering the light-shielding film 33 to the adhesive layer 34.

Further, the printing medium 31 may be prepared by forming the heat-sensitive coloring layer 23 on the substrate 22, forming the light-shielding film 33 on the adhesive layer 34, and adhering the heat-sensitive coloring layer 23 and the adhesive layer 34.

Further, the light-shielding sheet 32 is not limited to one composed of the light-shielding film 33 and the adhesive layer 34, and it can be composed of, for example, a resin layer which has light-shielding and adhesive properties. In this case, the printing medium 31 can be prepared by forming the heat-sensitive coloring layer 23 on the substrate 22 and further directly coating the material having the light-shielding property and the adhesion on the heat-sensitive coloring layer 23 by a coating method such as a spin coating method. Such a light-shielding sheet 32 is realized with a material having a low adhesion to a body to be adhered, namely, the heat-sensitive coloring layer 23.

In the printing, the light-shielding sheet 32 is peeled off, and the printing medium 31 is used as the medium 35 comprising the substrate 22 and the heat-sensitive coloring layer 23.

Fig. 1B is a sectional view showing the printing and recording medium 36 of a second embodiment of the invention. The printing and recording medium 36 comprises the disk-like optical recording member 20, the coloring member 37 including the heat-sensitive coloring layer 23, and the light-shielding sheet 32.

The optical recording member 20 comprises the light-reflecting layer and the data recording layer. It is prepared by, for example, laminating an organic coloring material layer 25 as the data recording layer, the light reflecting layer 26 made of a metal or the like and a protecting layer 27 made of an ultraviolet-curing resin or the like in this order on a substrate 30 formed of, for example, a polycarbonate. Further, the optical recording member 20 is so designed that one surface is a data recording or reading surface and the other surface is a printing surface. For example, the substrate 30 side surface is a data recording or reading surface 20b, and the protecting layer 27 side surface is a printing surface 20a. In the optical recording member 20, laser beams are applied via a pickup 39 from the data recording or reading surface 20b side, whereby the phase of the organic coloring material layer 25 is changed to record data or read data.

Such an optical recording member 20 is realized with an optical disk in which data is recorded or read from one surface, such as disk-like CD-R, CD, CD-ROM or CD-RW (rewritable). It can also be realized with an optical disk such as DVD (digital video disk)-ROM, DVD-RAM (randomaccess memory), DVD-Ror DVD-RW.

The heat-sensitive coloring layer 23 is provided on the side of the printing surface 20a of the optical recording member 20. Specifically, the coloring member 37 including the heat-sensitive coloring layer 23 is provided on the printing surface 20a. The coloring member 37 is prepared by mounting the heat-sensitive coloring layer 23 on the substrate 22 and adhering the substrate 22 to the printing surface 20a via the adhesive layer 24. The heat-sensitive coloring layer 23 is prepared, as in Fig. 1A, by laminating the three coloring layers 23a, 23b, 23c on the substrate 22 which are yellow-, magenta- and cyan-color developed, respectively.

The light-shielding sheet 32 is peelably provided on the side of the printing surface 20a of the optical recording member 20. The light-shielding sheet 32 shields the heat-sensitive coloring layer 23 from light in cooperation with the reflecting layer 26. The light-shielding sheet 32 is composed of the light-shielding film 33 and the adhesive layer 34, for example, the same as in Fig. 1A.

Incidentally, the printing and recording medium 36 can be prepared by forming the coloring member 37 on the printing surface 20a of the optical recording member 20 and the adhesive layer 34 on the coloring member 37 and further adhering the light-shielding film 33 to the adhesive layer 34.

Further, the printing and recording medium 36 can also be prepared by forming the coloring member 37 on the printing surface 20a of the optical recording member 20, forming the light-shielding film 33 on the adhesive layer 34 and adhering the coloring member 37 and the adhesive layer 34.

Further, the light-shielding sheet 32 is, as described above, not limited to one including the light-shielding film 33 and the adhesive layer 34. It can also be composed of, for example, a resin layer having the light-shielding property and an adhesion. In this case, the printing and recording member 36 can be prepared by forming the coloring member 37 on the printing surface 20a of the optical recording member 20 and further directly applying a material having light-shielding and adhesive properties, to the coloring member 37 by a coating method such as a spin coating method.

Further, the coloring member 37 can be prepared by forming the adhesive layer 24 on the printing surface 20a of the optical recording member 20, adhering the substrate 22 on the adhesive layer 24, and forming the heat-sensitive coloring layer 23 on the substrate 22.

Further, the coloring member 37 can also be prepared by forming the heat-sensitive coloring layer 23 on the substrate 22 and adhering the substrate 22 to the printing surface 20a via the adhesive layer 24.

Further, the coloring member 37 may be structured such that only the heat-sensitive coloring layer 23 is mounted on the printing surface 20a of the optical recording member 20. For example, the heat-sensitive coloring layer 23 can directly be provided on the printing surface 20a by a method such as deposition.

In the printing, the light-shielding sheet 32 is peeled off, and the printing and recording medium 36 is used as the medium 38 comprising the optical recording member 20 and the coloring member 37.

The coloring layer 23 is shielded from light by the light-shielding sheet 32 and the substrate 22 in the printing medium 31 and by the light-shielding sheet 32 and the reflecting layer 26 in the printing and recording medium 36. Accordingly, even when the printing medium 31 and the printing and recording medium 35 are allowed to be left as such under ordinary environment for a long period of time, the color of the coloring layer 23 is not fixed, and the ability to develop color by heat is maintained. The sizes and shapes of the printing medium 31 and the recording and printing medium 36 are approximately the same as those of the mediums 35, 38. Accordingly, they are not bulky, and therefore can easily be handled. Since they can be handled as such, packaging in selling can be simplified. Further, printing can be carried out using a rotary printing apparatus described later, by peeling off the light-shielding sheet 32 whenever a user wants to start printing.

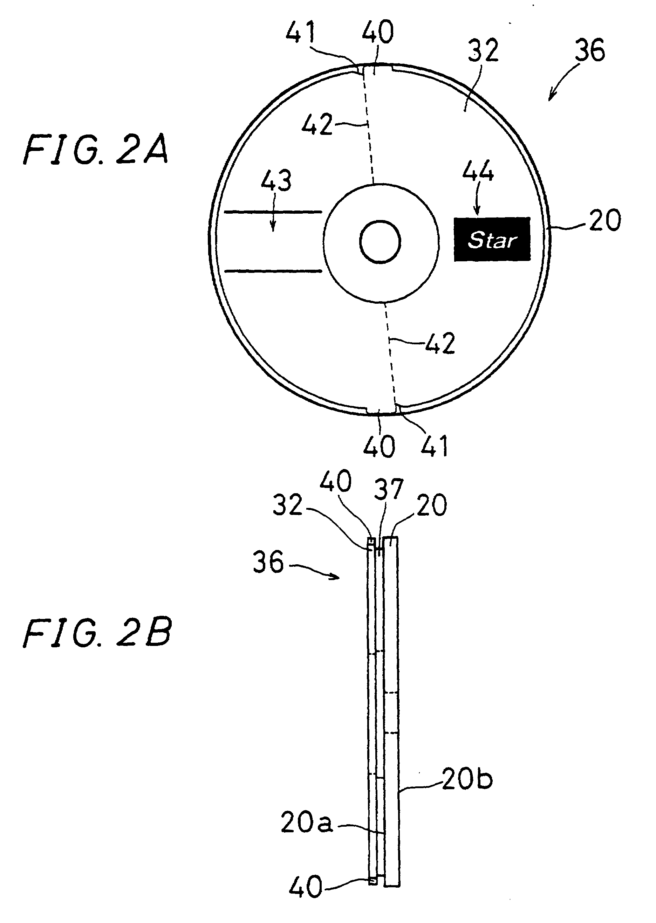

Fig. 2A is a plan view showing a specific example of the printing and recording medium 36, and Fig. 2B a side view thereof. The optical recording member 20 is disk-like, and doughnut-shaped with an inner hole in the center. The coloring member 37 is provided on the printing surface 20a of such an optical recording member 20 with a size which is smaller than that of the printing surface 20a, and the light-shielding sheet 32 is provided to cover at least the coloring member 37.

It is preferable that the adhesive layer 34 of the light-shielding sheet 32 is adhered to a non-printing region on the optical recording member 20 on which the heat-sensitive coloring layer 23 is not provided so that adhesive does not remain on the heat-sensitive coloring layer 23. That is, it is preferable that the adhesive layer is adhered in the vicinity of the outer peripheral portion or the inner peripheral portion of the optical recording member 20. In this case, the adhesive layer 34 is realized with a material having a low adhesion to the protecting layer 27 of a body to be adhered, namely, the optical recording member 20. It is realized with, for example, an acrylic adhesive having a low adhesion.

Further, the light-shielding sheet 32 has a projecting portion 40 for peeling. The projecting portion 40 is provided along a plane of the light-shielding sheet 32, namely, in a radial direction of the disk-like printing and recording medium 36. Incidentally, the projecting portion provided on the surface of the light-shielding sheet 32, namely in a direction perpendicular to the radial direction also falls under the scope of the invention. Users can easily peel off the light-shielding sheet 32 by holding the projecting portion 40.

Further, it is also possible that in the peeling, seal sheets or the like are adhered to the surface of the light-shielding sheet 32 to form the projecting portion 40 and the light-shielding sheet 32 is peeled off by holding the projecting portion 40. In this manner as well, the light-shielding sheet 32 can easily be peeled off.

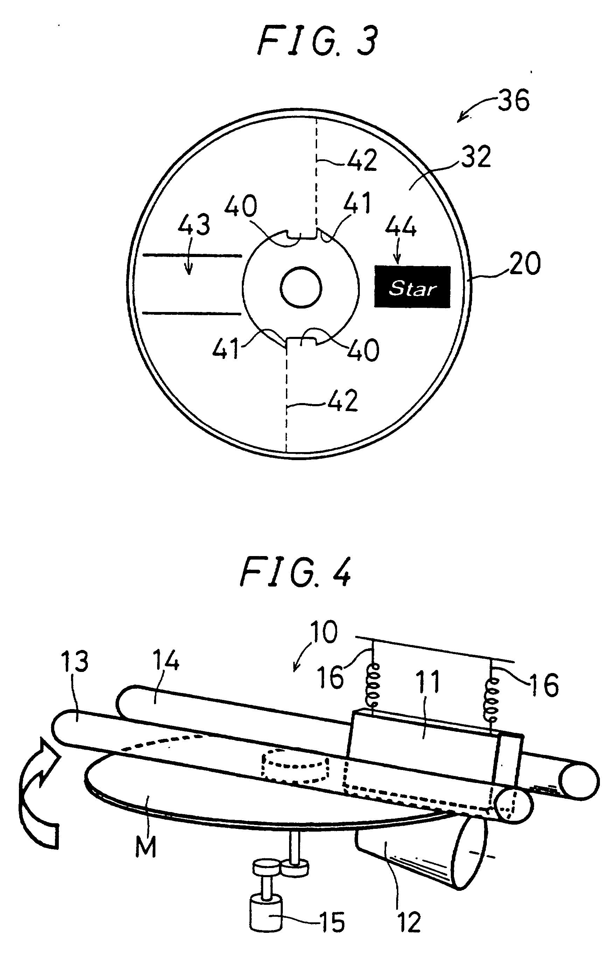

The projecting portion 40 may be provided on the outer peripheral portion of the light-shielding sheet 32 as shown in Fig. 2A or on the inner peripheral portion of the light-shielding sheet 32 as shown in Fig. 3. However, when the projecting portion is provided on the outer peripheral portion, it is advisable that the projecting portion is provided so as not to protrude from the optical recording member 20 in order to ensure a smooth printing action, and a recording or reading action.

Further, the projecting portion 40 is provided to balance the disk-like printing and recording medium 36. For example, they are provided symmetrically about a rotary axis of the printing and recording medium 36 as a center. Consequently, in recording and reading with rotation at relatively high speed, the printing and recording medium 36 can stably be rotated to ensure smooth recording and reading actions.

Further, the light-shielding sheet 32 has a low strength potion so as to tear the light-shielding sheet 32 in cooperation with the projecting portion 40. The low-strength portion is specifically realized by forming a notched portion 41 in the light-shielding sheet 32. It is also realized by forming a portion 42 having a low film thickness. By employing at least one of these, users can peel off the light-shielding sheet 32 easily and surely by holding the projecting portion 40 and tearing the light-shielding sheet 32 at the low-strength portion.

Incidentally, the notched portion 41 may be provided, like the projecting portion 40, on the outer peripheral portion of the light-shielding sheet 32 as shown in Fig. 2A or on the inner peripheral portion of the light-shielding sheet 32 as shown in Fig. 3.

Further, a writing region 43 where writing of information of letters, symbols or the like is allowed with a printing apparatus, by hand-writing, with a stamp or the like is provided on the surface of the light-shielding sheet 32. Consequently, users can effectively use the same, before the printing, to classify and identify the printing and recording medium 36.

Further, a printing region 44 on which specific information of letters, symbols or the like has been written in advance is provided on the surface of the light-shielding sheet 32. Users can easily identify, at a glance, the data recording or reading surface 20b of the printing and recording medium 36 by the information written on the region 44. That is, it can easily be identified that the surface opposite to the picture on which information has been written is the data recording or reading surface 20b. Moreover, information of the recorded contents on the printing and recording medium, information of handling the printing medium or the light-shielding sheet or the like can be known.

Further, it is preferable that the printing medium 31 and the printing and recording medium 35 of the invention are handled by being stored in a storage container made of a light-shielding material, because the light-shielding property to the coloring layer 23 is further enhanced.

Fig. 4 is a perspective view showing a simplified construction of a rotary printing apparatus 10 used in printing. The rotary printing apparatus 10 comprises a thermal head 11, a backup roller 12 and cathode tubes 13, 14, and carries out printing on a disk-like printing medium M. The disk-like printing medium Mherein is specifically realized with the mediums 35, 38 in which the light-shielding sheet 32 is peeled off from the printing medium 31 and the printing and recording medium 36 of the invention. However, in the printing medium 31, it is used by being cut in a disk shape.

The thermal head 11 is a thermal head of a line type extending in the radial direction of the disk-like printing medium M, and presses the printing and recording medium M from its surface with springs 16. A stepping motor 15 drives rotatably the disk-like printing medium M around its axis. The backup roller 12 is a roller which is covered on its surface with a rubber and which supports the disk-like printing medium M from the rear surface against pressing from the surface by the thermal head 11. It is rotated according to the rotation of the disk-like printing medium M. The cathode tubes 13, 14 emit light having a wavelength necessary to fix the color of the coloring layer of the disk-like printing medium M.

In such a rotary printing apparatus 10, the radial direction of the disk-like printing medium M is a main scanning direction, and the circumferential direction of the disk-like printing medium M is a sub-scanning direction. The apparatus carries out printing by selectively supplying heat to pixel regions arranged in the radial direction and the circumferential direction of the disk-like printing medium M to develop color and applying light having a predetermined wavelength necessary to fix the color.

Incidentally, a serial head capable of scanning along the radial direction of the disk-like printing medium M can also be used instead of the thermal head 11, and a turntable can also be used instead of the backup roller 12.

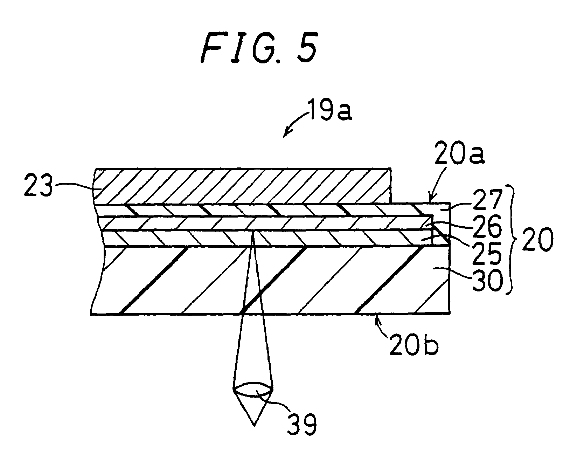

Fig. 5 is a sectional view of a printing and recording medium 19a of a third embodiment of the invention. The printing and recording medium 19a is structured of the optical recording member 20 and the heat-sensitive coloring layer 23 provided on the printing surface 20a of the optical recording member 20. The optical recording member 20 is realized with the optical disk. The thickness of the optical disk is 1.2 mm. Further, the permissible range of warpage is within 400 µm.

When a title or the like is printed on the printing and recording medium 19a, the rotary printing apparatus 10 as shown in Fig. 4 is used. Accordingly, the disk-like printing medium M is specifically realized with the printing and recording medium 19a.

When the recorded data is reproduced, the printing and recording medium M is inserted into the reproduction apparatus, and clamped. Laser beams are applied from the data recording or reading surface 20b side via the pickup 39 while the medium is rotated, and the recorded data is reproduced.

A printing and recording medium 19a of a third embodiment as shown in Fig. 5 is one in which quite a thin heat-sensitive coloring layer 23 is provided on a relatively thick optical recording medium 20, and the thickness of the printing and recording medium 19a is approximately the same as the thickness of the optical recording member 20. Accordingly, the printing and recording medium 19a can stably and surely be inserted in and taken out from the reproduction apparatus. Further, the recorded data can stably and surely be reproduced. Still further, the printing and recording medium 19a can also stably and surely be inserted in and taken out from the rotary printing apparatus 10, to ensure stable printing.

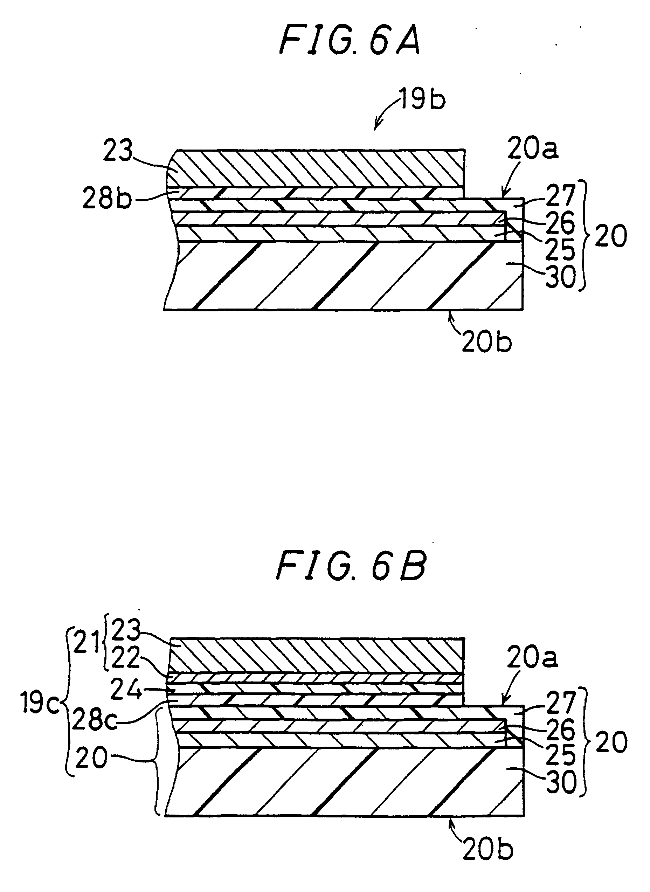

Fig. 6A is a sectional view showing a printing and recording medium 19b of a fourth embodiment of the invention. The printing and recording medium 19b comprises the same optical recording member 20 and heat-sensitive coloring layer 23 as the printing and recording medium 19a of the third embodiment, and further a heat-insulating layer 28b interposed between the optical recording member 20 and the heat-sensitive coloring layer 23. The printing and recording medium 19b is prepared by, for example, mounting the heat-insulating layer 28b on the optical recording member 20 and then mounting the heat-sensitive coloring layer 23.

Fig. 6B is a sectional view showing a printing and recording medium 19c which is another example of the fourth embodiment of the invention. The printing and recording medium 19c comprises the same optical recording member 20 as the printing and recording medium 19a of the third embodiment, a coloring member 21 provided instead of the heat-sensitive coloring layer 23 and a heat-insulating layer 28c interposed between the optical recording member 20 and the coloring member 21. The coloring member 21 has the heat-sensitive coloring layer 23 composed of the three coloring layers 23a, 23b, 23c on the light-shielding substrate 22 such as paper which coloring layers are yellow-, magenta- and cyan-color developed, respectively. The surface of the substrate 22 opposite to the heat-sensitive coloring layer 23 is adhered to the heat-insulating layer 28c on the printing surface 20a of the optical recording member 20 via the adhesive layer 24.

For example, in the printing and recording medium 19c, while the heat-insulating layer 28c is provided on the printing surface 20a of the optical recording member 20, a coloring member is separately prepared. The coloring member prepared herein is one in which the heat-sensitive coloring layer 23 is provided on one surface of the substrate 22, the adhesive layer 24 is provided on the other surface and release paper is adhered to the adhesive layer 24. The printing and recording medium 19c is prepared by peeling the release paper from such a coloring member and adhering the exposed adhesive layer 24 to the heat-insulating layer 28c provided on the optical recording member 20.

Alternatively, the printing and recording medium 19c is prepared by mounting the heat-insulating layer 28c on the printing surface 20a of the optical recording member 20, mounting the adhesive layer 24 thereon, adhering the substrate 22 and further mounting the heat-sensitive coloring layer 23 thereon. When the heat-insulating layer 28c having adhesive property is provided herein, the adhesive layer 24 is unnecessary.

Alternatively, in the printing and recording medium 19c, while the heat-insulating layer 28c is provided on the printing surface 20a of the optical recording member 20 and the adhesive layer 24 is further provided, the coloring member is separately prepared. The coloring member prepared herein is one in which the heat-sensitive coloring layer 23 is provided on one surface of the substrate 22. The printing and recording medium 19c is prepared by adhering the substrate 22 of such a coloring member to the adhesive layer 24 on the heat-insulating layer 28c. When the heat-insulating layer 28c having adhesive property is provided herein, the adhesive layer 24 is unnecessary.

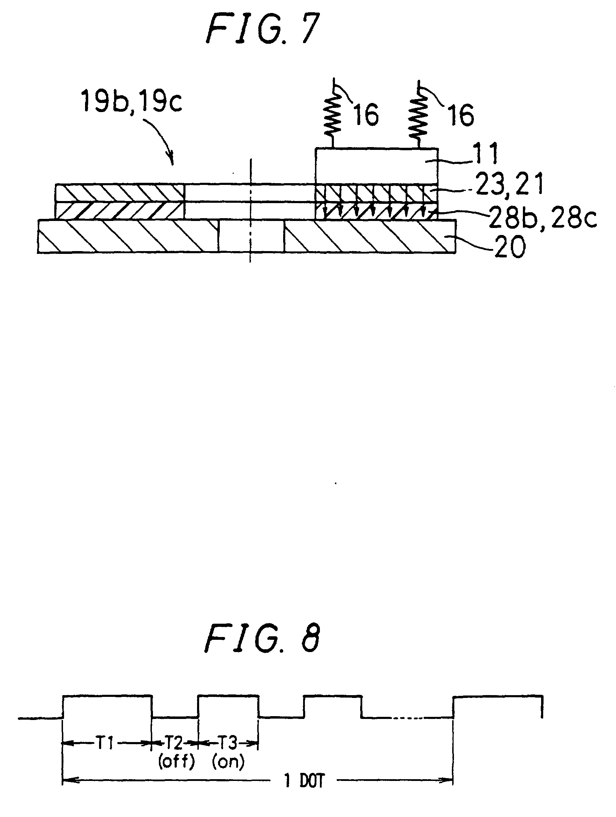

Fig. 7 is a sectional view for describing the heat-insulating action of the printing and recording mediums 19b, 19c. In the printing, the thermal head 11 is contacted with the printing and recording mediums 19b, 19c, and heat from the thermal head 11 is applied to the heat-sensitive coloring layer 23 and the coloring member 21 of the mediums 19b, 19c. Since heat is transferred from a high-temperature portion to a low-temperature portion, it is transferred to the heat-sensitive coloring layer 23 and the coloring member 21 and further to the optical recording member 20. However, since the heat-insulating layers 28b, 28c are provided on the printing and recording mediums 19b, 19c of the fourth embodiment, the amount of heat transferred to the optical recording member 20 is decreased owing to the heat-insulating layers 28b, 28c. Consequently, the destruction of the data recorded in the optical recording member 20 by heat can be prevented.

For example, when printing on the optical recording member 20 was directly carried out using the printing apparatus, recorded data was destroyed under the following printing conditions. At this time, the head temperature is approximately between 200 °C and 250 °C.

### (Printing conditions in destruction of record data)

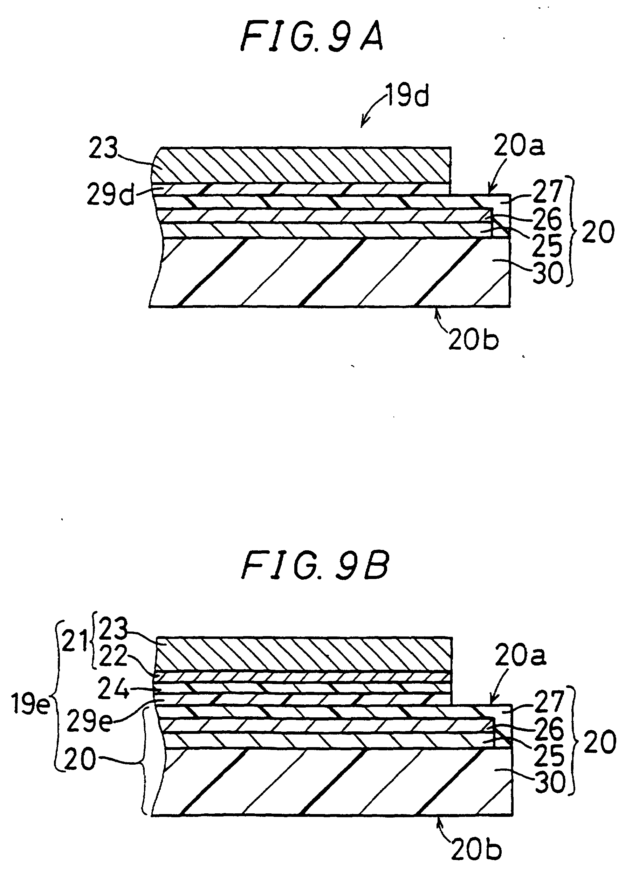

Head voltage: 16 V
Energizing control: gradient control by repeating on/off for each dot (maximum repeating number 250) ; as shown in Fig. 8, bias energizing time T1 is 1,500 us, energizing-off time T2 is 24 us, and energizing-on time T3 is 40 us)
Repeating number of energizing: 100
Application time: less than 50 line
Resistance value of head: 1,250 Ω
Output of power consumed in head: 0.204 W
Amount of energy for 1 dot: 0.978 mJ (energizing is repeated 100 times)

The repeating number of energizing in the maximum density under these conditions is approximately 200, and the head temperature in printing 100 lines continuously is approximately 300 °C. At this time, the amount of energy for 1 dot is 1.711 mJ (repeating energizing 200 times). Accordingly, there is a difference by 50 °C to 100 °C between the temperature in the destruction of recorded data and the maximum temperature applied to the head. Thus, it is understood that the heat-insulating layer is required.

Assuming the difference in temperature by 50 °C to 100 °C is completely absorbed with the heat-insulating layers 28b, 28c, the film thickness is required to be 0.14 mm or more in case of using, for example, an acrylic resin having a thermal conductivity of 0.17 to 0.25 (W·M⁻¹·K⁻¹) as the heat-insulating layers 28b, 28c. In case of using, for example, a rubber having a thermal conductivity of 0.1 to 0.2 (W·M⁻¹·K⁻¹), the film thickness is required to be 0.11 mm or more. Actually, in consideration of the fact that heat is absorbed and released with the heat-sensitive coloring layer 23, the coloring member 21 and the like, the film thickness of the heat-insulating layers 28b, 28c is determined. It is therefore possible to determine the film thickness which is lower than the foregoing film thickness. Such heat-insulating layers 28b, 28c are realized with an acrylic adhesive, a rubber, a foaming double-coated tape in which adhesive layers are provided on both sides of a foaming substrate, and the like.

Fig. 9A is a sectional view showing a printing and recording medium 19d of a fifth embodiment of the invention. The printing and recording medium 19d has approximately the same structure as that of the printing and recording medium 19b of the fourth embodiment. However, an elastic layer 29d instead of the heat-insulating layer 28b is provided between the optical recording member 20 and the heat-sensitive coloring layer 23. The printing and recording medium 19d is prepared by, for example, mounting the elastic layer 29d on the optical recording member 20 and then mounting the heat-sensitive coloring layer 23.

Fig. 9B is a sectional view showing a printing and recording medium 19e which is another example of the fifth embodiment of the invention. The printing and recording medium 19e has approximately the same structure as that of the printing and recording medium 19c of the fourth embodiment. However, an elastic layer 29e instead of the heat-insulating layer 28c is provided between the optical recording member 20 and the coloring layer 21.

For example, the printing and recording medium 19e is prepared such that while the elastic layer 29e is provided on the printing surface 20a of the optical recording member 20, the same coloring member as used in another example of the fourth embodiment is separately prepared and the exposed adhesive layer 24 by peeling off the release paper and the elastic layer 29e provided on the optical recording member 20 are adhered.

Alternatively, the printing and recording medium 19e is prepared by mounting the elastic layer 29e on the printing surface 20a of the optical recording member 20, mounting the adhesive layer 24 thereon, adhering the substrate 22, and further mounting the heat-sensitive coloring layer 23 thereon. When the elastic layer 29e having adhesive property is provided herein, the adhesive layer 24 is unnecessary.

Alternatively, the printing and recording medium 19e is prepared such that while the elastic layer 29e is provided on the printing surface 20a of the optical recording member 20 and the adhesive layer 24 is further provided, the same coloring member as used in another example of the second embodiment is separately prepared and the substrate 22 of the coloring member and the adhesive layer 24 on the elastic layer 29e are adhered. When the elastic layer 29e having adhesive property is provided herein, the adhesive layer 24 is unnecessary.

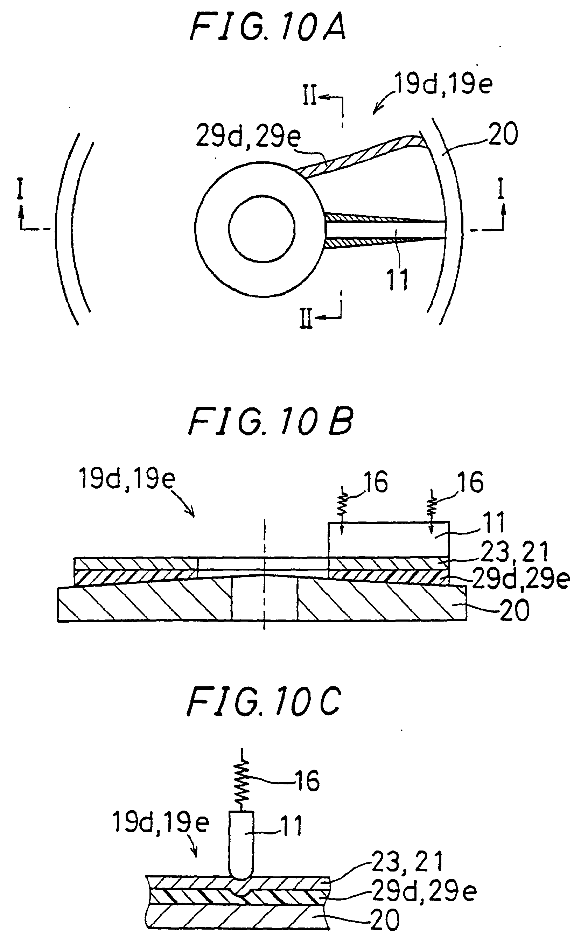

Figs. 10A to 10C are views for describing the elastic action of the printing and recording mediums 19d, 19e. Fig. 10A is a partially cutaway plan view of the printing and recording mediums 19d, 19e. Fig. 10B is a sectional view taken along I-I of Fig. 10A, and Fig. 10C is a sectional view taken along II-II of Fig. 10A. In the printing, the thermal head 11 is contacted with the printing and recording mediums 19d, 19e. Usually, warpage exists in the optical recording member 20. However, since the elastic layers 29d, 29e are provided on the printing and recording mediums 19d, 19e of the fifth embodiment, the warpage is absorbed with the elastic layers 29d, 29e. Accordingly, inferior contact of the thermal head 11 and the printing and recording mediums 19d, 19e owing to the warpage can be prevented. Further, for example, the difference in thickness sometimes exists between the inner periphery and the outer periphery of the optical recording member 20. However, the difference in thickness is absorbed with the elastic layers 29d, 29e. Accordingly, inferior contact owing to the difference in thickness can be prevented. Consequently, the high-quality printing is enabled.

In case of warpage of 20 µm or the like occurring in the optical recording member 20, the elastic layers 29d, 29e are required to have a thickness of 0.1 mm or more for contacting the thermal head 11 to the whole periphery of the printing and recording mediums 19d, 19e through only the elasticity of the elastic layers 29d, 29e when the pressure from the thermal head 11 to the printing and recording mediums 19d, 19e is 1.2 kg, the contact area is 20 mm² and the coefficient of elasticity of the rubber used as the material of the elastic layers 29d, 29e is 10 to 30 kgf/cm². Actually, in consideration of the elasticity of the heat-sensitive coloring layer 23, the coloring member 21 and the like, the film thickness of the elastic layers 29d, 29e is determined. Thus, the thickness can be set to be lower than the foregoing film thickness. Such elastic layers 92d, 29e are realized with, for example, an acrylic adhesive, a rubber, a foaming double-coated tape in which adhesive layers are provided on both sides of a foaming substrate, and the like.

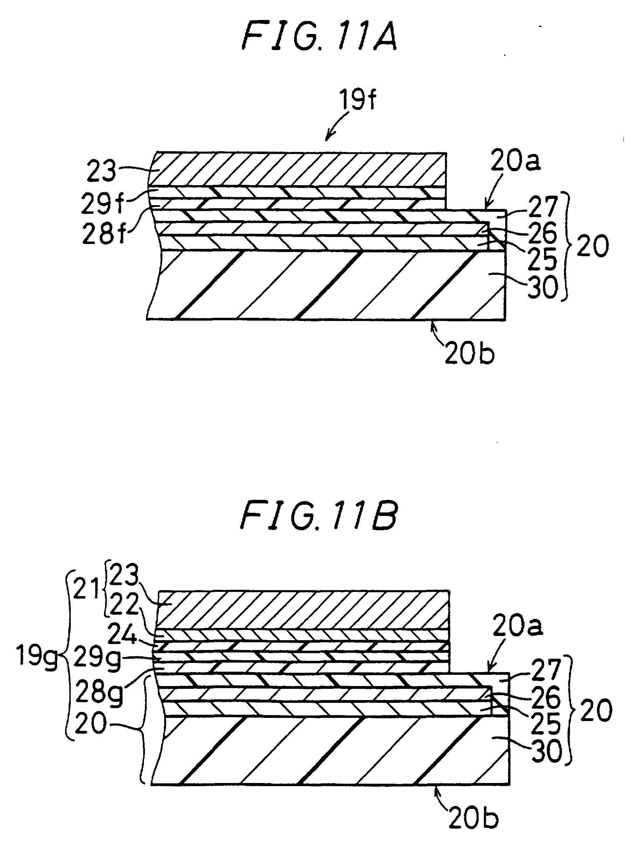

Fig. 11A is a sectional view showing a printing and recording medium 19f of a sixth embodiment of the invention. The printing and recording medium 19f is one in which a heat-insulating layer 28f and an elastic layer 29f are both interposed between the optical recording member 20 and the heat-sensitive coloring layer 23. The printing and recording medium 19f is prepared by, for example, mounting the heat-insulating layer 28f on the optical recording member 20, mounting the elastic layer 29f thereon and then mounting the heat-sensitive coloring layer 23. By the way, the elastic layer 29f and the heat-insulating layer 28f may be provided in the inverted order.

Fig. 11B is a sectional view showing a printing and recording medium 19g which is another example of the sixth embodiment of the invention. The printing and recording medium 19g is one in which a heat-insulating layer 28g and an elastic layer 29g are both interposed between the optical recording member 20 and the coloring member 21.

For example, the printing and recording medium 19g is prepared such that while the heat-insulating layer 28g is provided on the printing surface 20a of the optical recording member 20 and the elastic layer 29g is further provided thereon, the same coloring member as used in another example of the fourth embodiment is separately prepared and the exposed adhesive layer 24 by peeling off release paper of the coloring member and the elastic layer 29g on the optical recording member 20 are adhered. By the way, the heat-insulating layer 28g and the elastic layer 29g may be provided in the inverted order.

Alternatively, the printing and recording medium 19g is prepared by mounting the heat-insulating layer 28g and the elastic layer 29g in this order on the printing surface 20a of the optical recording member 20, mounting the adhesive layer 24 on the elastic layer 29g, adhering the substrate 22 thereon and further mounting the heat-sensitive coloring layer 23 thereon. By the way, the heat-insulating layer 28g and the elastic layer 29g may be provided in the inverted order. Further, when heat-insulating layer 28g or the elastic layer 29g have adhesive property on the side of the substrate 22, the adhesive layer 24 is unnecessary.

Alternatively, the printing and recording medium 19g is prepared such that while the heat-insulating layer 28g and the elastic layer 29g are provided in this order on the printing surface 20a of the optical recording member 20 and the adhesive layer 24 is further provided, the same coloring member as used in another example of the fourth embodiment is separately prepared and the substrate 22 of the coloring member and the adhesive layer 24 on the elastic layer 29g are adhered. By the way, the heat-insulating layer 28g and the elastic layer 29g may be provided in the inverted order. Further, when the heat-insulating layer 28g or the elastic layer 29g has adhesive property on the side of the substrate 22, the adhesive layer 24 is unnecessary.

In the printing and recording mediums 19f, 19g of the sixth embodiment, heat transferred to the optical recording member 20 can be decreased by the heat-insulating layers 28f, 28g in the printing, and inferior contact of the thermal head 11 owing to the warpage or difference in thickness of the optical recording member 20 can be prevented with the elastic layers 29f, 29g. Accordingly, the destruction of the data recorded in the optical recording member 20 by heat is prevented, and the high-quality printing is enabled.

Regarding the printing and recording mediums 19f, 19g, the heat-insulating layers 28f, 28g are prepared in the same manner as the heat-insulating layers 28b, 28c, and the elastic layers 29f, 29g are prepared in the same manner as the elastic layers 29d, 29e.

### [Effects of the Invention]

As has been discussed in detail above, according to the invention, the light-shielding sheet and the substrate shield the coloring layer from light, with the result that the printing medium can be allowed to be left as such under ordinary environment for a long period of time. The printing medium having the light-shielding sheet can easily be handled and simplify the package in selling. Further, whenever a user wants to start printing, printing can be carried out by peeling off the light-shielding sheet.

Further, according to the invention, light to the coloring layer of the disk-like printing and recording medium is also shielded by the light-shielding sheet and the reflecting layer the same as described above. Accordingly, it can be allowed to be left under ordinary environment for a long period of time without fixing the color and be easily handled. It can simplify the package in selling, and whenever a user wants to start printing, printing can be carried out by peeling off the light-shielding sheet.

Further, according to the invention, the light-shielding sheet can easily be peeled off by holding the projecting portion.

Further, according to the invention, the projecting portion is provided to balance the printing and recording medium, so that stable printing, recording and reading operations can be practiced. Especially, it is effective also in recording and reading actions with rotation at high speed.

Further, according to the invention, the light-shielding sheet can be peeled off easily and surely by holding the projecting portion and tearing the light-shielding sheet in the low-strength portion.

Further, according to the invention, information of letters, signals or the like can optionally be written on the surface of the light-shielding sheet. Therefore, the medium can be identified by the written information before printing.

Further, according to the invention, specific information of letters, signals or the like written in advance on the surface of the light-shielding sheet makes it possible to easily identify the recording or reading surface at a glance. Moreover, it is possible to give users information of recorded contents on the printing and recording medium, information of handling the printing medium or the light-shielding sheet, and the like.

Further, according to the invention, the printing and recording medium is prepared by mounting the quite thin coloring layer on the relatively thick optical recording member. Consequently, the thickness of the printing and recording medium is approximately the same as the specific thickness of the optical recording member. Thus, stable insertion or take-out of the printing and recording medium in or from the reproduction apparatus and stable reproduction of the recorded data can be ensured.

Further, according to the invention, the heat-insulating layer can prevent heat generated from the thermal head or the like in the printing of a title or the like from being transferred to the optical recording member. Consequently, the destruction of the data recorded in the optical recording member by heat can be prevented.

Further, according to the invention, since the adhesion between the thermal head and the coloring layer is enhanced by the elastic layer in the printing, the decrease in the adhesion owing to the warpage or difference in thickness of the optical recording member can be alleviated, and the high-quality printing is enabled. Moreover, by providing both the heat-insulating layer and the elastic layer, transfer of heat from the thermal head or the like to the optical recording member can be prevented. In addition, the adhesion between the thermal head and the coloring layer is enhanced, the destruction of recorded data by heat is prevented, and the high-quality printing is enabled.

Further, according to the invention, the heat insulating layer between the optical recording member and the coloring member can prevent heat from the thermal head or the like from being transferred to the optical recording member.

Further, according to the invention, the elastic layer between the optical recording member and the coloring member makes it possible to achieve proper contact of the thermal head and the coloring layer.

Further, according to the invention, the heat-insulating layer and the elastic layer between the optical recording member and the coloring member make it possible to prevent heat from the thermal head or the like from being transferred to the optical recording member and to enhance the adhesion between the thermal head and the coloring layer.

## Claims

1. A printing medium comprising:
a light-shielding substrate;
a coloring layer provided on the substrate, a color of the coloring layer being developed by heat and being fixed by light; and
a light-shielding sheet peelably provided on the coloring layer to shield the coloring layer from light.

2. A printing and recording medium comprising:
a disk-like optical recording member comprising a light-reflecting layer and a data-recording layer, one surface of the disk-like optical recording member being a data recording or reading surface and the other surface thereof being a printing surface;
a coloring layer provided on the printing surface side, a color of the coloring layer being developed by heat and fixed by light; and
a light-shielding sheet peelably provided on the printing surface side, for shielding the coloring layer from light.

3. The printing and recoding medium of claim 2, wherein the light-shielding sheet has a projecting portion for peeling.

4. The printing and recoding medium of claim 3, wherein the projecting portion is formed to balance the printing and recording medium.

5. The printing and recoding medium of claim 2, wherein the light-shielding sheet has a low strength portion so as to tear in peeling.

6. The printing and recoding medium of claim 2, wherein a surface of the light-shielding sheet has a region where writing of information is allowed.

7. The printing and recoding medium of claim 2, wherein specific information is written in advance on a surface of the light-shielding sheet.

8. A printing and recording medium comprising:
an optical recording member composed of a light-reflecting layer and a data-recording layer, one surface of the optical recording member being a data recording or reading surface and the other surface thereof being a printing surface; and
a coloring layer provided on the printing surface side, a color of the coloring layer being color-developed by heat.

9. The printing and recoding medium of claim 8, wherein a heat-insulating layer for preventing heat from being transferred to the optical recording member is interposed between the optical recording member and the coloring layer.

10. The printing and recoding medium of claim 8 or 9, wherein an elastic layer for uniformly transferring heat to the coloring layer is interposed between the optical recording member and the coloring layer.

11. A printing and recording medium comprising:
an optical recording member composed of a light-reflecting layer and a data-recording layer, one surface of the optical recording member being a data recording or reading surface and the other surface thereof being a printing surface;
a coloring member provided on the printing surface side, including a substrate and a coloring layer provided on the substrate, a color of the coloring layer being developed by heat; and
a heat-insulating layer interposed between the optical recording member and the coloring member, for preventing heat applied in the color development from being transferred to the optical recording member.

12. The printing and recoding medium of claim 11, wherein instead of the heat-insulating layer, an elastic layer which uniformly transfers heat applied in the color development, to the coloring layer, is interposed between the optical recording member and the coloring layer.

13. The printing and recoding medium of claim 11, wherein an elastic layer which uniformly transfers heat applied in the color development, to the coloring layer, is interposed, in addition to the heat-insulating layer, between the optical recording member and the coloring layer.
